# EUROPEAN PATENT APPLICATION

(11) **EP 4 089 305 A1**
(43) Date of publication of application: **16.11.2022**
(21) Application number: 20913033.5
(22) Date of filing: 18.12.2020
(51) Int. Cl.: F16K 27/00, C25D 11/00, C25D 11/04, C25D 11/16

(54) **VALVE BLOCK FOR HYDROGEN GAS, AND METHOD FOR PRODUCTION THEREOF**

(30) Priority: 08.01.2020 JP 2020001246
(71) Applicant: KAWASAKI JUKOGYO KABUSHIKI KAISHA, Kobe-shi, Hyogo 650-8670 (JP)
(72) Inventor: SUZUKI, Yutaka, Hyogo 6508670 (JP); NINOMIYA, Makoto, Hyogo 6508670 (JP); OKAMOTO, Masayoshi, Hyogo 6508670 (JP); YAMASHITA, Hiroshi, Hyogo 6508670 (JP); INOUE, Masaaki, Hyogo 6508670 (JP)
(74) Representative: EIP
(86) International application number: PCT/JP2020/047486
(87) International publication number: WO 2021/140877

(57) **Abstract**

A valve block for hydrogen gas includes a valve block body having an outer surface on which an aluminum anodizing treatment has been performed, and a flow channel for hydrogen gas formed in the valve block body, and the flow channel has a sealing face in an inner face, and the sealing face is a machined face.

## Description

### Technical Field

The present invention relates to a valve block for hydrogen gas having a flow channel for hydrogen gas, and a method for producing the same.

### Background Art

A valve block in which high-pressure hydrogen gas flows is made of an aluminum-based alloy, and an aluminum anodizing treatment is performed on the valve block to improve the corrosion resistance. As an example of such a valve block, for example, a valve unit (namely, valve block) of PTL 1 is known.

### Citation List

### Patent Literature

PTL 1: Japanese Patent Publication No. 6258016

### Summary of Invention

### Technical Problem

In a valve block, by performing an aluminum anodizing treatment on an inner face of a flow channel, the inner face of the flow channel is roughened. The flow channel has a sealing face in the inner face. Roughening of the sealing face results in deterioration in sealing properties of the sealing face. In the valve block of PTL 1, high-pressure hydrogen gas flows in the flow channel, and a load is repetitively exerted on the inner face of the flow channel. Especially in an intersection part of the flow channel, the stress concentrates on the inner face. On the other hand, the aluminum anodizing treatment performed on the inner face of the flow channel results in deterioration in the strength of the inner face of the flow channel. Therefore, the durability of the inner face of the flow channel (especially the inner face of an intersection part) deteriorates. Thus, the aluminum anodizing treatment performed on the inner face of the flow channel exerts various influences.

In light of the above, it is an object of the present invention to provide a valve block for hydrogen gas capable of suppressing influences on the inner face of the flow channel exerted by an aluminum anodizing treatment while keeping the corrosion resistance of the outer surface, and a method for producing the same.

### Solution to Problem

A valve block for hydrogen gas that is the first aspect of the invention includes a valve block body of aluminum having an outer surface on which an aluminum anodizing treatment has been performed, and a flow channel for hydrogen gas formed in the valve block body, the flow channel has a sealing face in an inner face, and the sealing face is a machined face.

According to the first aspect of the invention, since an oxidized layer is formed on the outer surface of the valve block by an aluminum anodizing treatment, it is possible to keep the corrosion resistance of the outer surface. On the other hand, since the sealing face in the inner face of the flow channel is a machined face, it is possible to prevent the sealing face from being roughened by the aluminum anodizing treatment. This makes it possible to prevent the leakage of hydrogen gas from the sealing face. That is, in the valve block, it is possible to ensure the sealing properties of the inner face of the flow channel while keeping the corrosion resistance of the outer surface.

A valve block for hydrogen gas that is the second aspect of the invention includes a valve block body of aluminum having an outer surface on which an aluminum anodizing treatment has been performed, and a flow channel for hydrogen gas formed in the valve block body, the flow channel has at least two channel sections, the two channel sections are arranged to intersect with each other in an intersection part, and an inner face of the intersection part has a machined face.

According to the second aspect of the invention, since an oxidized layer is formed on the outer surface of the valve block by an aluminum anodizing treatment, it is possible to keep the corrosion resistance of the outer surface. On the other hand, since the inner face of the intersection part in the flow channel is a machined face, it is possible to ensure the strength in the intersection part where the stress receiving from the hydrogen gas tends to concentrate. That is, in the valve block, it is possible to ensure the durability of the inner face of the flow channel while keeping the corrosion resistance of the outer surface.

A method for producing a valve block for hydrogen gas that is the third aspect of the invention includes a shape-making step of making a shape of a valve block of aluminum, an outer surface treatment step of performing an aluminum anodizing treatment on an outer surface of the valve block after the shape-making step; and a flow channel forming step of forming an inner face of a flow channel for hydrogen gas in the valve block as a machined face, and the outer surface treatment step is executed after masking the flow channel formed in the flow channel forming step or before the flow channel forming step.

According to the third aspect of the invention, since an oxidized layer is formed on the outer surface of the valve block by the aluminum anodizing treatment, it is possible to keep the corrosion resistance of the outer surface. Also, since the inner face of the flow channel can be left as a machined face by executing the outer surface treatment step after masking the flow channel formed in the flow channel forming step or before the flow channel forming step, it is possible to ensure the strength of the inner face of the flow channel while keeping the corrosion resistance of the outer surface. That is, in the valve block, it is possible to ensure the durability of the inner face of the flow channel while keeping the corrosion resistance of the outer surface.

### Advantageous Effects of Invention

According to the first to the third aspects of the invention, it is possible to suppress the influences on the inner face of the flow channel exerted by the aluminum anodizing treatment while keeping the corrosion resistance of the outer surface.

The above objects, other objects, features, and merits of the present invention will be apparent from the following detailed description of preferred embodiments with reference to attached drawings.

### Brief Description of Drawings

Fig. 1 is a sectional view showing a valve block of an embodiment of the present invention.
Fig, 2 is a flowchart showing a production process of the valve block shown in Fig. 1.
Fig. 3 is a flowchart showing other production process of the valve block shown in Fig. 1.

### Description of Embodiments

Hereinafter, a valve block 1 of an embodiment according to the present invention, and a method for producing the same are described by referring to the aforementioned drawings. The concept of the direction used in the following description is merely used for convenience in description, and should not be understood to limit the orientation or the like of the configuration of the invention to the described direction. The valve block 1 and the method for producing the same described below indicate merely one embodiment of the present invention. Therefore, the present invention is not limited to the following embodiments, but addition, deletion, and modification can be made without departing from the scope of the invention.

### <Valve block>

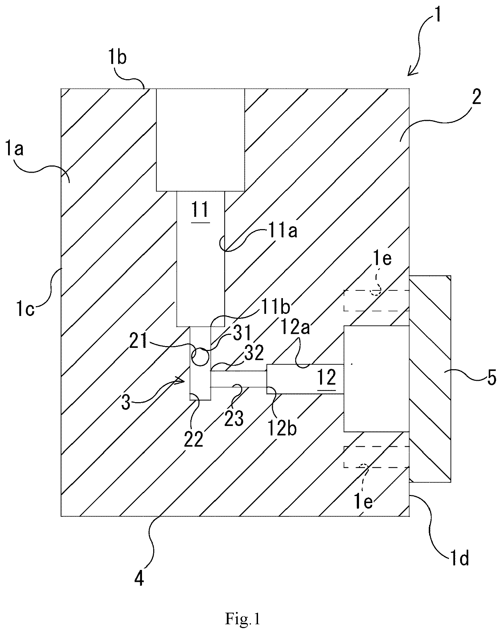

To a gas tank (not shown) for storing hydrogen gas, a tank valve device is attached to an opening of the gas tank so as to seal the opening and adjust the quantity of hydrogen gas to be delivered therefrom. To be more specific, the tank valve device includes the valve block 1 as shown in Fig. 1. The valve block 1 has an insertion part (not shown) on the back side of the paper of Fig. 1, and the insertion part is inserted into the opening of the gas tank. The valve block 1 allows a protrusion 1a to project from the opening of the gas tank. The tank valve device includes various valves, for example, an electromagnetic valve, a relief valve, a hand valve, and a safety valve so as to adjust the delivery quantity of hydrogen gas. The valve block 1 is configured as follows to configure these valves.

That is, the valve block 1 has a valve block body 2 and a flow channel 3. The valve block 1 is made of aluminum, more specifically made of aluminum or an aluminum-based alloy. And, an aluminum anodizing treatment has been performed on the outer surface of the valve block 1 as will be described later. Accordingly, an oxidized layer 4 is formed on the entire outer surface. Also, in the valve block 1, the flow channel 3 for hydrogen gas in which the hydrogen gas delivered from the tank flows is formed.

The flow channel 3 is formed to deliver the hydrogen gas inside the tank to a hydrogen gas consuming device, for example, a fuel cell. The flow channel 3 has two housing sections 11, 12 and four channel sections 21 to 23. The number of housing sections and the number of the channel sections included in the flow channel 3 are merely examples, and the numbers are not limited to the numbers described above. The housing sections 11, 12 are formed on the same plane, and formed to have approximately circular sectional shapes. The housing sections 11, 12 accommodate valve elements (not shown). Thus, various valves as described above are configured in the valve block 1. To be more specific, the valve block 1 has a rear face (the face on the upper side of the paper of Fig. 1) 1b and left and right lateral faces 1c, Id. The housing sections 11, 12 are respectively formed on two of the three faces 1b, 1c, Id (the rear face 1b and the right lateral face Id in the present embodiment). The first housing section 11 extends in the direction orthogonal to the rear face 1b. The second housing section 12 extends in the direction orthogonal to the right lateral face Id.

Also, to the outer surface of the valve block 1, a lid 5 is fastened so as to close at least one of the housing sections 11, 12. And, a bolt hole 1e is formed in the valve block 1 so as to fasten the lid 5. In the present embodiment, the second housing section 12 is closed by the lid 5, and a plurality of bolt holes 1e are formed on the right lateral face Id. That is, by screwing a bolt penetrated in the lid 5 in the bolt hole 1e, the lid 5 is fastened to the valve block 1. The housing sections 11, 12 connect with the interior of the tank via the three channel sections 21 to 23. The three channel sections 21 to 23 are formed, for example, in the following manner.

The first channel section 21 connects with the interior of the tank, and extends straight from the back side to the front side of the paper of Fig. 1 (namely, the upward direction). Also, the second channel section 22 connects with the first channel section 21. The second channel section 22 extends from the first channel section 21 in a first direction that is orthogonal to the axial line of the first channel section 21 (namely, the fore-and-aft direction). Also, the first housing section 11 connects with one end of the second channel section 22. Also, the third channel section 23 connects with the other end side of the second channel section 22. The third channel section 23 extends from the second channel section 22 in a direction orthogonal to the axial line of the second channel section 22 (namely, the right direction). Further, the third channel section 23 connects with the second housing section 12. The flow channel 3 further includes a fourth channel section (not shown) as described below. That is, the fourth channel section connects with an inner face 11a of the first housing section 11. The fourth channel section is formed so as to deliver the hydrogen gas outside the valve block 1.

The flow channel 3 formed in this manner has intersection parts 31, 32 in the following sites. That is, the first intersection part 31 is formed in a site where the first channel section 21 and the second channel section 22 that are orthogonal to each other intersect. The second intersection part 32 is formed in a site where the second channel section 22 and the third channel section 23 intersect. Also in a site where the fourth channel section and the first housing section 11 intersect, an unillustrated intersection part is formed. In these intersection parts 31, 32 where holes having circular sectional shapes intersect with each other, stress concentration tends to occur due to repeated loading when the hydrogen gas flows in the flow channel 3.

Also, the first and second housing sections 11, 12 of the flow channel 3 accommodate valve elements in a slidable manner. And, the inner face 11a and an inner face 12a of the housing sections 11, 12 constitute sealing faces. That is, gaps between the valve elements and the inner faces 11a, 12a are sealed up to prevent the hydrogen gas flowing in the flow channel 3 from leaking out from the housing sections 11, 12. Also, the first housing section 11 has a first valve seat part 11b around an opening end of the second channel section 22. The second housing section 12 has a second valve seat part 12b around an opening end of the third channel section 23. These valve elements can be seated on the corresponding valve seat parts 11b, 12b, respectively. Then, by seating, the gap between the second channel section 22 and the first housing section 11, and the gap between the third channel section 23 and the second housing section 12 are closed.

The valve block 1 configured in this manner is formed by performing an aluminum anodizing treatment on a half-finished product made of aluminum, more specifically made of aluminum or an aluminum-based alloy. That is, in the valve block 1, an aluminum anodizing treatment has been performed on the outer surface. Accordingly, the oxidized layer 4 is formed on the entire outer surface. The oxidized layer 4 has a thickness of, for example, 5 µm or more and 30 µm or less. Since the oxidized layer 4 is formed on the outer surface of the valve block 1 by an aluminum anodizing treatment in this way, it is possible to keep the corrosion resistance of the outer surface. Also, since the oxidized layer 4 can be formed in a relatively short time, it is possible to reduce the production cost. The thickness of the oxidized layer 4 is not limited to the aforementioned range.

On the other hand, the flow channel 3 is formed by machining using a jig such as a drill, more specifically by drilling. That is, the inner face of the flow channel 3 is formed as a machined face. Therefore, the inner face of the flow channel 3 remains as it is machined in a state of a product, and the oxidized layer 4 does not form the inner face. Therefore, the strength of the inner face of the flow channel 3 is ensured. Accordingly, it is possible to ensure the durability in the inner face of the flow channel 3. In other words, the valve block 1 is capable of ensuring the durability of the inner surface of the flow channel 3 by having a machined face, while keeping the corrosion resistance of the outer surface by having the oxidized layer 4. Especially in the intersection parts 31, 32 where stress concentration tends to occur, it is more preferred that the inner faces are machined faces. Also, since the inner faces of the housing sections 11, 12 are formed as machined faces in the valve block 1, it is possible to keep the surface roughness of the inner faces 11a, 12a and the valve seat parts 11b, 12b low. As a result, it is possible to ensure the sealing properties between the valve elements and the inner faces 11a, 12a, and between the valve elements and valve seat parts 11b, 12b, namely the sealing properties between the valve elements and the sealing faces. In other words, it is possible to prevent the hydrogen gas from leaking from the housing sections 11, 12. Also in this point, it is possible to ensure the durability of the inner face of the flow channel 3, while keeping the corrosion resistance of the outer surface in the valve block 1.

### <Method for producing valve block>

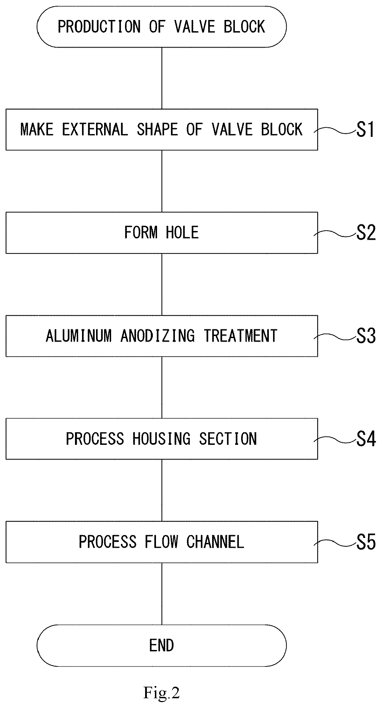

The valve block 1 configured as described above is produced by the process shown in Fig. 2 in the present embodiment. That is, upon start of the production process of the valve block 1, the flow proceeds to step S1. In a valve block external shape making step which is step S1, the external shape of the valve block 1 is made to produce a half-finished product. The external shape making of the valve block 1 is carried out by cutting or forging in the present embodiment. The external shape making of the valve block 1 may be carried out by drawing or extruding besides the aforementioned method. Upon production of the half-finished product of the valve block 1, the flow proceeds to step S2. In a hole forming step which is step S2, a hole that is different from the flow channel 3, and has an inner face on which the later-described aluminum anodizing treatment is to be performed is formed. In the present embodiment, the hole is the bolt hole 1e, and other wiring passages (not shown). The bolt hole 1e is formed on the right lateral face Id by threading, for example by tapping. And, upon formation of the bolt hole 1e, the flow proceeds to step S3.

In an outer surface treatment step which is step S3, an aluminum anodizing treatment is performed on the outer surface of the half-finished product to form the oxidized layer 4 having a thickness of 5 µm or more and 30 µm or less on the entire outer surface. More specifically, in the outer surface treatment step, as a pretreatment preceding the aluminum anodizing treatment, degreasing is performed on the half-finished product, and then etching is performed. Thereafter, the half-finished product is dipped in an electrolytic bath so as to perform an aluminum anodizing treatment. Examples of the electrolytic bath include a sulfuric acid bath, a phosphoric acid bath, a chromium acid and an oxalic acid bath, and a sulfuric acid bath is used in the present embodiment. Then, by electrolyzing the electrolyte in the electrolytic bath in the condition that the half-finished product is dipped in the electrolytic bath, the oxidized layer 4 is formed on the outer surface of the half-finished product. On this occasion, the conditions in the aluminum anodizing treatment are set so that the oxidized layer 4 having a thickness of 5 µm or more and 30 µm or less is formed on the outer surface. The foregoing conditions include, for example, the temperature of the electrolytic bath and the treatment time. After the oxidized layer 4 is formed, sealing is conducted to complete the oxidized layer 4. Since the oxidized layer 4 is formed on the outer surface of the valve block 1 by the aluminum anodizing treatment as described above, it is possible to keep the corrosion resistance of the outer surface. Also, by performing the hole forming step before the aluminum anodizing treatment, the inner face of the bolt hole 1e is formed by the oxidized layer 4. This makes it possible to improve the corrosion resistance of the bolt hole 1e. Therefore, the inner face of the hole is prevented from being corroded by moisture or rainwater coming into the hole. And, upon formation of the oxidized layer 4, the flow proceeds to step S4.

In a housing section processing step which is step S4, the first and second housing sections 11, 12 are formed in the valve block 1 by machining. More specifically, in the valve block 1, the rear face (the face on the upper side of the paper of Fig. 1) 1b and the left and right lateral faces 1c, 1d are drilled with a jig such as a drill. For example, the first housing section 11 is formed to extend in the direction orthogonal to the rear face 1b. Also, the second housing section 12 is formed to extend in the direction orthogonal to the right lateral face 1d. The two housing sections 11, 12 formed in this way are formed so that the respective axes are located on approximately the same plane. Upon formation of the housing sections 11, 12 in this way, the flow proceeds to step S5.

In a channel section processing step which is step S5, the first to third channel sections 21 to 23 and the fourth channel section are formed in the valve block 1 by machining so as to form machined faces in the inner faces. More specifically, a jig such as a drill is inserted to each of the first and second housing sections 11, 12 to conduct drilling. As a result, the second and third channel sections 22, 23 are respectively formed to extend from the first and second housing sections 11, 12 along the respective axial lines. As a result, the second channel section 22 and the third channel section 23 intersect and communicate with each other. Drilling of the fourth channel section is continued until the fourth channel section reaches the inner face 11a of the first housing section 11. Further, the first channel section 21 is formed by drilling from the lower face side of the valve block 1. And, drilling of the first channel section 21 is continued until the first channel section 21 and the second channel section 22 intersect and communicate with each other. Upon end of the drilling of the first to third channel sections 21 to 23 and the fourth channel section, the valve block 1 is completed and the production process of the valve block 1 ends.

In such a production method of the valve block 1, the flow channel 3 is formed by machining in the flow channel forming step including the housing section processing step and the channel section processing step executed after the aluminum anodizing treatment. Therefore, the inner face of the flow channel 3 can be left as a machined face, and thus it is possible to ensure the strength of the inner face of the flow channel 3 while keeping the corrosion resistance of the outer surface. That is, in the valve block, it is possible to ensure the durability of the inner face of the flow channel while keeping the corrosion resistance of the outer surface. Also, since the housing sections 11, 12 are formed by machining after the aluminum anodizing treatment, it is possible to keep the surface roughness of the inner faces 11a, 12a and the valve seat parts 11b, 12b which are sealing faces low. In other words, by leaving the sealing faces as the machined faces, it is possible to prevent the sealing faces from being roughened by the aluminum anodizing treatment. As a result, it is possible to produce the valve block 1 in which leakage of hydrogen gas from the sealing face is prevented.

### <Other embodiments>

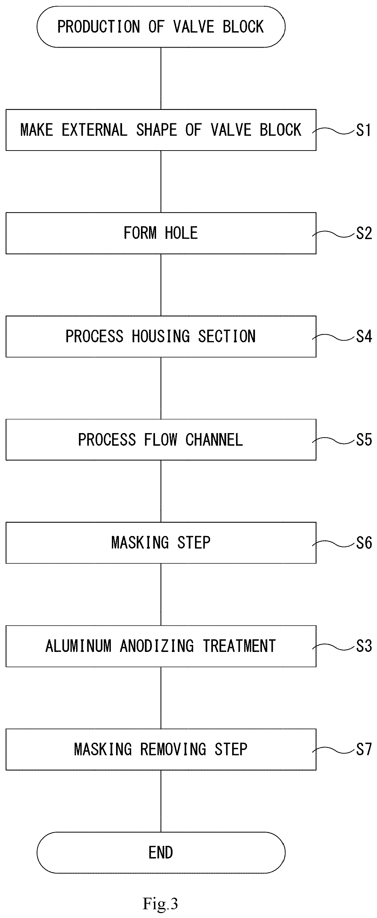

In the production method of the valve block 1 of the present embodiment, the flow channel 3 is formed after the aluminum anodizing treatment, however, the formation need not necessarily be conducted in this manner. That is, as shown in the flowchart of Fig. 3, after step S2, the flow proceeds to step S4 which is the housing section processing step, and the housing sections 11, 12 are formed, and then the flow proceeds to step S5 which is the channel section processing step, and the first to third channel sections 21 to 23 and the fourth channel section are formed. In other words, the flow channel 3 is formed before the aluminum anodizing treatment. Thereafter, the flow proceeds to step S6 which is a masking step, and the flow channel 3 is masked. In the present embodiment, each opening of the flow channel 3 is closed with a plug to prevent the electrolyte from entering the flow channel 3. After plugging, the flow proceeds to step S3 which is an outer surface treatment step. Then, in step S3, the oxidized layer 4 is formed on the entire outer surface of the valve block 1. Lastly, the plug is removed in step S7 which is a masking removing step. The valve block 1 produced in this way also exerts the same operation and effect as those in the foregoing production method of the valve block 1 because the inner face of the flow channel 3 can be left as a machined face.

Also, in the present embodiment, the hole forming step of step S2 need not necessarily be executed before the outer surface treatment step of step S3, and may be executed after the outer surface treatment step of step S3. Also, the housing section forming step of step S4 is executed before formation of the channel sections of step S5, however, the order of formation is not limited to this. That is, the housing section forming step of step S4 may be executed after formation of the channel sections of step S5.

The valve block 1 need not necessarily be a valve block of a tank valve device as described above. That is, it is only required that the flow channel 3 in which hydrogen gas flows is formed in the valve block 1. Also, in the present embodiment, the flow channel 3 is formed in such a manner that respective axial lines of the sections other than the first channel section 21 are situated on approximately the same plane, but the sections need not necessarily be formed on approximately the same plane. That is, the channel sections 22, 23 may be deviated from each other, for example, in the vertical direction. Also, the channel sections 22, 23 need not necessarily be formed along the axial lines of the corresponding housing sections 11, 12, and may be formed diagonally relative to the axial lines. While the channel sections 21 to 23 intersect in a T-letter shape, the shape is not limited to this, and the channel sections 21 to 23 may intersect crosswise. Also, the channel sections 21 to 23 may intersect in a L-letter shape. Also, the intersecting channel sections 21 to 23 may intersect orthogonally.

Further, the sealing faces in the valve block 1 are not limited to the inner faces 11a, 12a and the valve seat parts 11b, 12b described above. That is, the sealing face may be a part on which a resin gasket or the like abuts and may be any face that is to be sealed.

Various modifications and other embodiments of the present invention will be apparent to those skilled in the art from the above description. Accordingly, the above description should be interpreted merely as illustration, and is provided for the purpose of indicating the best mode for carrying out the present invention to those skilled in the art. The details of the structure and/or the function can be substantially changed without departing from the spirit of the present invention.

### Reference Signs List

- 1: valve block
- 1e: bolt hole
- 2: valve block body
- 3: flow channel
- 4: oxidized layer
- 11: first housing section
- 11a: inner face (sealing face)
- 11b: first valve seat part (sealing face)
- 12: second housing section
- 12a: inner face (sealing face)
- 12b: second valve seat part (sealing face)
- 31: first intersection part
- 32: second intersection part

## Claims

1. A valve block for hydrogen gas comprising:
a valve block body of aluminum having an outer surface on which an aluminum anodizing treatment has been performed; and
a flow channel for hydrogen gas formed in the valve block body,
the flow channel having a sealing face in an inner face,
the sealing face being a machined face.

2. A valve block for hydrogen gas comprising:
a valve block body of aluminum having an outer surface on which an aluminum anodizing treatment has been performed; and
a flow channel for hydrogen gas formed in the valve block body,
the flow channel having at least two channel sections,
the two channel sections being arranged to intersect with each other in an intersection part,
an inner face of the intersection part having a machined face.

3. The valve block for hydrogen gas according to claim 1 or 2, wherein
the valve block body has an oxidized layer formed by the aluminum anodizing treatment on the outer surface, and
the oxidized layer has a thickness of 5 µm or more and 30 µm or less.

4. A method for producing a valve block for hydrogen gas, comprising:
a shape-making step of making a shape of a valve block of aluminum;
an outer surface treatment step of performing an aluminum anodizing treatment on an outer surface of the valve block after the shape-making step; and
a flow channel forming step of forming an inner face of a flow channel for hydrogen gas in the valve block as a machined face;
the outer surface treatment step being executed after masking the flow channel formed in the flow channel forming step or before the flow channel forming step.

5. The method for producing a valve block for hydrogen gas according to claim 4, wherein
the flow channel has a sealing face in an inner face, and
in the flow channel forming step, the sealing face is formed as the machined face.

6. The method for producing a valve block for hydrogen gas according to claim 4 or 5, further comprising:
a hole forming step of forming a hole that is different from the flow channel in the valve block, wherein
the hole forming step is executed before the outer surface treatment step, and
an inner face of the hole is subjected to an aluminum anodizing treatment in the outer surface treatment step.

7. The method for producing a valve block for hydrogen gas according to any one of claims 4 to 6, wherein
the flow channel has at least two channel sections,
the two channel sections are arranged to intersect with each other in an intersection part, and
in the flow channel forming step, the intersection part is formed as the machined face.
